# EUROPEAN PATENT SPECIFICATION

(11) **EP 0 758 567 B1**
(45) Date of publication and mention of the grant of the patent: **11.06.2003**
(21) Application number: 95910725.1
(22) Date of filing: 02.03.1995
(51) Int. Cl.: B23F 17/00

(54) **METHOD FOR WORKING MEMBERS DIVIDED INTO TWO EACH HAVING RACK TEETH**
VERFAHREN ZUM BEARBEITEN VON ZWEITEILIGEN WERKSTÜCKEN, WOBEI JEDER TEIL VON ZÄHNEN VERSEHEN WIRD
PROCEDE DESTINE AU FA ONNAGE D'ELEMENTS EN DEUX PARTIES DONT CHACUNE EST CONSTITUEE DE DENTS DE CREMAILLERE

(43) Date of publication of application: 19.02.1997
(73) Proprietor: Nihon Velbon Seiki Kogyo Kabushiki Kaisha, Tokyo 187 (JP)
(72) Inventor: NAKATANI, Koichiro, Tokyo 161 (JP)
(74) Representative: Brookes Batchellor
(86) International application number: PCT/JP95/00332
(87) International publication number: WO 96/026803

(56) References cited:
- JP-A- 4 159 017
- JP-A- 54 084 694
- PATENT ABSTRACTS OF JAPAN vol. 1995, no. 10, 30 November 1995 (1995-11-30) & JP 07 185936 A (NIPPON BERUBON SEIKI KOGYO KK), 25 July 1995 (1995-07-25)

## Description

### TECHNICAL FIELD

This invention relates to a method of producing a member which consists of two parts and has rack teeth, the production method calling for shaping rack teeth by cutting while dividing the entire rack into two parts.

### BACKGROUND ART

As shown in Fig. 9, a photography tripod is typically provided with an elevation pipe to attach a camera platform on which a camera is mounted. Rack teeth 2 which are engaged with a pinion 4 are shaped along the surface of elevation pipe 1. Attached to elevation pipe 1 near its upper end are leg pipes 5 which can be spread apart and closed. With the configuration as above, by revolving pinion 4 elevation pipe 4 is moved up or down in order to adjust the photographing angle.

Further, setting a large range for the vertical movement of elevation pipe 1 is usually done by using a low elevation pipe 1. However, in case of taking a picture from a long angle with leg pipes 5 being spread, if elevation pipe 1 is long, it is often impossible because its lower end abuts against the ground. As an example of a means offered for solving this problem is a configuration which calls for dividing elevation pipe 1 into two parts and removing the portion of the pipe that projects down when taking a picture from a low angle.

According to such a configuration of the two-part elevation pipe, however, it is difficult to match the undulations of the rack teeth shaped on the elevation pipe; if the rack teeth become out of sync, their engagement with the pinion, too, becomes out of sync, which prevents smooth elevation of the elevation pipe.

Therefore, precise cutting is required to shape rack teeth on each divided member in such a manner that the undulations of the rack teeth correspond to each other when the members are connected, and requirement for such high precision is not suitable to mass production.

In order to solve the above problems, an object of the invention is to provide a method for processing a member which has rack teeth and is divided into two parts, the method ensuring that the undulations of the rack teeth on both members correspond to each other in the state where they are connected.

### DISCLOSURE OF INVENTION

The invention comprises a rack member production method which calls for arranging rotary shaping blades for forming rack teeth by cutting into the rack formation surface of respective base members for rack production, the rotary shaping blades being parallelly arranged in a row in the longitudinal direction of the base members for rack production; maintaining the direction in which the rotary shaping blades are arranged parallel to the length of the base members for rack production; and forming numerous rack teeth on the rack formation surface of the respective base members for rack production by simultaneously cutting these base members for rack production with these rotary shaping blades; wherein the center of the trough of one of the rack teeth being formed on the rack formation surface of each base member for rack production is cut through by a rotary cutting blade simultaneously with formation of the rack teeth. Therefore, in a state where the members are joined together, the rack teeth at the connecting point are connected to each other at their trough portions, with their undulations corresponding to each other. Furthermore, as the troughs of both rack teeth are formed in half sections, the portion does not break so easily as a case where the top part is cut in half. Thus, according to the invention, it is easy to obtain a rack member divided in two parts of which the undulations of the rack teeth are ensured to correspond to each other when both parts are joined together, with the strength of the rack teeth being maintained so that the rack teeth are free from the danger of breakage.

### BRIEF DESCRIPTION OF DRAWINGS

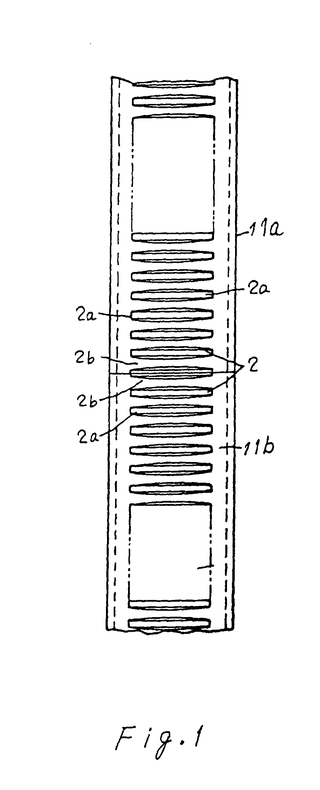

Fig. 1 is a front view of a two-part member having rack teeth which have been produced according to a method of the present invention;
Fig. 2 is an oblique view of an embodiment of a base member for rack production used for said method of producing a two-part member having rack teeth;
Fig. 3 is an oblique view of a V-block for holding said base member for rack production when cutting rack teeth into this member;
Fig. 4 is a sectional view of rotary shaping blades for same;
Fig. 5 is a sectional view of a rotary shaping blade according to another embodiment;
Fig. 6 is a sectional view of a cutting blade of same;
Fig. 7 is a front view of same;
Fig. 8 is a sectional view of a cutting blade according to yet another embodiment; and
Fig. 9 is a partially cut out oblique view of a tripod.

### BEST MODE FOR CARRYING OUT THE INVENTION

Next, a method of processing a two-part member having rack teeth according to an embodiment of the present invention is explained hereunder, referring to the drawings.

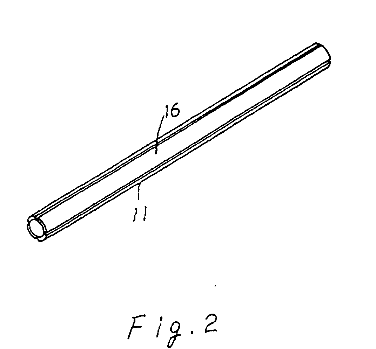

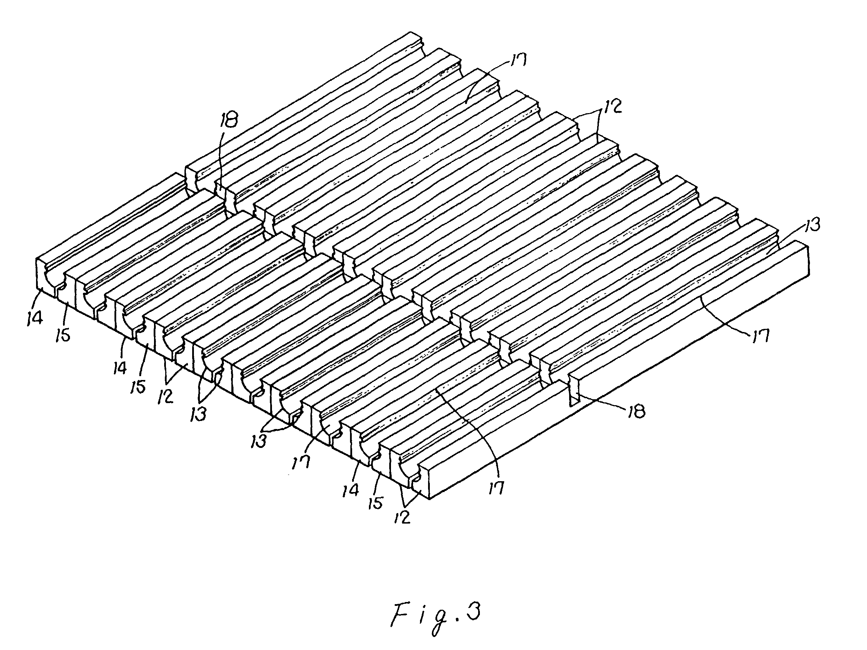

Fig. 2 is an oblique view of a pipe body 11 which is a base member for rack production referred to in the appended claims and may be formed by means of extrusion or extraction. Pipe body 11 is securely fitted on a V-block 12 shown in Fig. 3. V-block 12 consists of a pair of V-block bodies 14/15 which are both divided at about the midpoint along the axial direction of pipe body 11. In their connected state, V-block bodies 14/15 form a concave arc-shaped support surface 13 whose shape corresponds to the outer surface of pipe body 11. In a state where V-block bodies 14/15 are joined, V-block 12 supports pipe 11 fitted therein and is also provided with an open space 17 so that a rack formation surface 16 of pipe body I 1 is exposed.

Further, a groove 18 for cutting the pipe body in half is shaped about the middle of V-block bodies 14/15 of V-block 12, the groove extending in the direction perpendicular to the length of V-block 12.

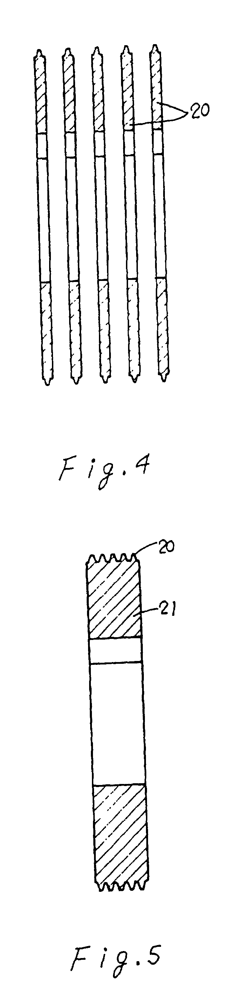

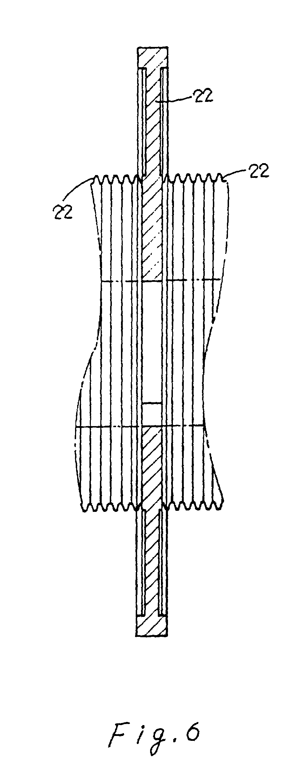

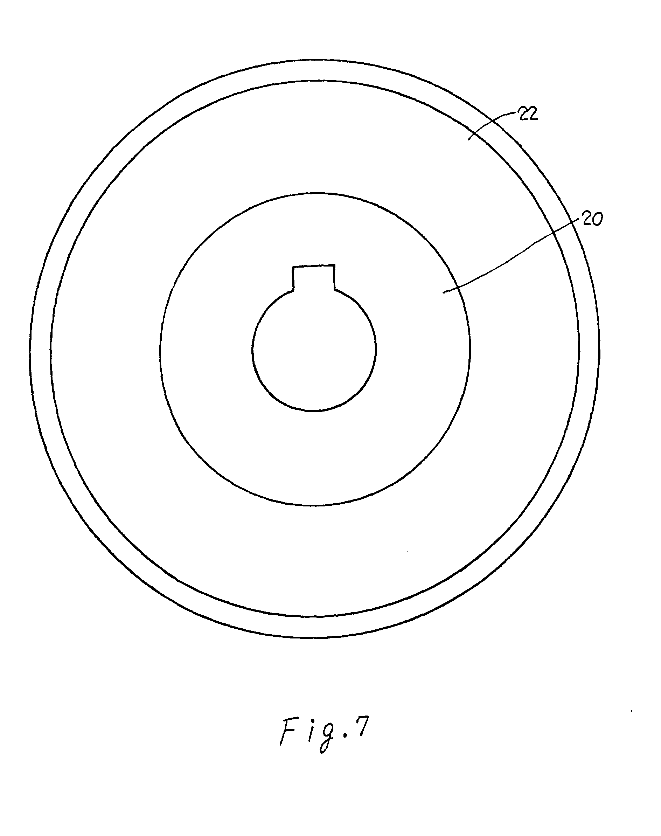

Fig. 4 is a sectional view of disk-shaped rotary shaping blades 20 for forming rack teeth 2 by cutting rack formation surface 16 of pipe body 11. Rotary shaping blades 20 are arranged parallel to one another in the longitudinal direction of pipe body 11, in a number corresponding to the number of rack teeth 2. As shown in Fig. 5, rotary shaping blades 20 may be a block 21 on which a plurality of rotary shaping blades 20 are integrally formed in such a manner that rotary shaping blades 20 are arranged parallel to one another.

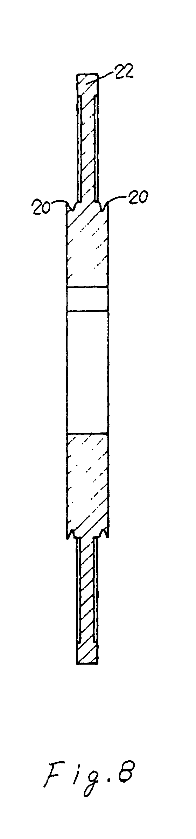

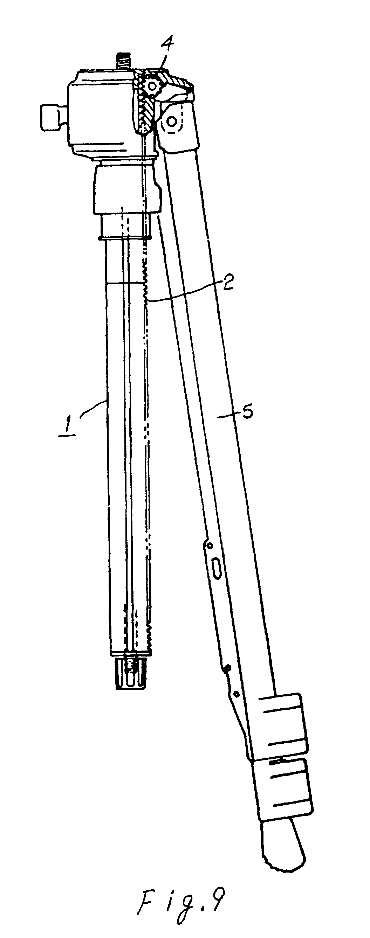

Figs. 6 and 7 respectively represent a sectional view and a front view of a disk-shaped rotary cutting blade 22 to be sandwiched between parallelly arranged rotary shaping blades 20 and held at a specified cutting position. Rotary cutting blade 22 is coaxial with rotary shaping blades 20, with a diameter greater than that of rotary shaping blades 20, and has such a shape as to be capable of cutting through the center of trough portion 2a of a rack tooth 2.

Next, the operation procedure of the above embodiment is explained hereunder.

First of all, snugly place the base member for rack production, i. e. pipe body 11, on support surface 13 defined by V-block bodies 14/15 of each V-block 12 in a state where V-block bodies 14/15 are separated, secure each pipe body 11 by tightly joining V-block bodies 14/15, and arrange in rows V-blocks 12 which respectively support pipes 11. In this state, rack formation surface 16 of each pipe body 11 is exposed from open space 17 of V-block 12.

Next, arrange rotary shaping blades 20 for cutting and shaping rack teeth 2 in a manner that they are parallel to each other, in a row along the length of pipe bodies 11, in other words along the axial direction thereof, and place rotary cutting blade 22 for cutting the center of trough portion 2a of rack tooth 2 at a specified location between rotary shaping blades 20 arranged in parallel as above.

Then, move these rotary shaping blades 20 using a horizontal milling machine while rotating rotary shaping blades 20, with the direction in which rotary shaping blades 20 are arranged being maintained parallel to the length of pipe bodies 11, so that numerous rack teeth 2 are simultaneously formed on rack formation surfaces 16 of pipe bodies 11 by rotary shaping blades 20. At the same time, rotary cutting blade 22 rotated together with rotary shaping blades 20 advances into cutting groove 18, which is shaped about the middle of V-block bodies 14/15 of each V-block 12, as it simultaneously cuts in half the center of trough portion 2a of one of rack teeth 2a being shaped on rack formation surface 16 of each pipe body 11.

Thus, rack teeth 2 are simultaneously shaped on pipe bodies 11 when pipe bodies 11 are divided. When separated parts 11a/11b of each pipe body are connected, their rack teeth 2 are joined at trough portion 2a so that the undulation of rack tooth 2 on one part matches that on the other. Further, as said rack tooth 2 on each part is so shaped as to have the length of its trough 2a reduced in half, its strength is maintained, thereby preventing rack tooth 2 from chipping, compared with a case where top portion 2b is cut in half.

Furthermore, as shown in Fig. 8, rotary cutting blade 22 may have such a configuration as to be integrally provided at its each side with a blade portion 20a for forming a half of trough portion 2a of rack tooth 2. In this case, rotary shaping blades 20, too, include blades which are capable of forming a half trough portion 2a.

Although the invention is explained referring to the above embodiment, wherein the base member for rack production referred to in the appended claims is pipe body 11 which constitutes the elevation pipe of a tripod, said base member for rack production is not limited to a pipe or a tube but may be various kinds of a dividable rack member.

### INDUSTRIAL APPLICABILITY

As described above, a method of producing a member which consits of two parts and has rack teeth according to the invention is applicable not only to a tubular member but also to any type of member to be formed into a dividable member having rack teeth.

## Claims

1. A production method of a 2-part member having rack teeth which calls for arranging rotary shaping blades (20) for forming rack teeth by cutting into the rack formation surface (16) respective base members (11) for rack production, the rotary shaping blades (20) being parallelly arranged in a row in the longitudinal direction of the base members (11) for rack production; maintaining the direction in which the rotary shaping blades (20) are arranged parallel to the length of the base members (11) for rack production; and forming numerous rack teeth (2) on the rack formation surface (16) of the respective base members (11) for rack production by simultaneously cutting said base members (11) for rack production with said rotary shaping blades (20); wherein:
the center of the trough (2a) of one of the rack teeth (2) being formed on the rack formation surface (16) of each base member (11) for rack production is cut through by a rotary cutting blade (20) simultaneously with formation of the rack teeth (2),
thereby simultaneously producing two-part members (11a,11b) having rack teeth (2).

## Patentansprüche

1. Herstellungsverfahren eines zweiteiligen (Werk)Stückes, das Zahnstangenzähne besitzt, das drehbare Formschneiden (20) zum Formen von Zahnstangenzähnen durch Einschneiden von entsprechenden Basisstücken (11) in die Oberfläche (16) der Zahnstange hinein zur Zahnstangenherstellung anordnet, wobei die drehbaren Formschneiden (20) parallel in einer Reihe in Längsrichtung der Basis-Stücke (11) zur Zahnstangenherstellung angeordnet sind, Aufrechterhalten der Richtung, in der die drehbaren Formschneiden (20) parallel zur Länge der Basis-Stücke (11) zur Zahnstangenherstellung angeordnet sind, und Ausbilden zahlreicher Zahnstangenzähne auf der Oberfläche (16) der Zahnstange der entsprechenden Basis-Stücke (11) zur Zahnstangenherstellung durch gleichzeitiges Einschneiden der Basis-Stücke (11) zur Zahnstangenherstellung mit den drehbaren Formschneiden (20), wobei das Zentrum des Grundes (2a), das von einem der Zahnstangenzähne (2) auf der Oberfläche (16) der Zahnstangen jedes Basis-Stückes (11) zur Zahnstangenherstellung geformt wird, durch eine drehbare Formschneide (20) gleichzeitig mit der Bildung der Zahnstangenzähne (2) hineingeschnitten wird, wodurch gleichzeitig zweiteilige (Werk)Stücke (11a,11b) mit Zahnstangenzähnen (2) hergestellt werden.

## Revendications

1. Procédé de production d'un élément en deux parties comportant des dents de crémaillère qui nécessite l'agencement de lames de façonnage rotative (20) pour former des dents de crémaillère en usinant dans la surface de formation de crémaillère (16) des éléments de base respectifs (11) pour la production de crémaillère, les lames de façonnage rotatives (20) étant agencées parallèlement en une rangée dans le sens longitudinal des éléments de base (11) pour la production de crémaillère ; le maintien de la direction dans laquelle les lames de façonnage rotatives (20) sont agencées parallèlement à la longueur des éléments de base (11) pour la production de crémaillère ; et la formation de nombreuses dents de crémaillère (2) sur la surface de formation de crémaillère (16) des éléments de base respectifs (11) pour la production de crémaillère en usinant simultanément lesdits éléments de base (11) pour la production de crémaillère à l'aide desdites lames de façonnage rotatives (20) ; dans lequel :
le centre du creux (2a) d'une des dents de crémaillère (2) formées sur la surface de formation de crémaillère (16) de chaque élément de base (11) pour la production de crémaillère est usiné par une lame de coupe rotative (20) simultanément avec la formation des dents de crémaillère (2),
produisant, de ce fait, simultanément, des éléments en deux parties (11a, 11b) comportant des dents de crémaillère (2).
